(19) **Europäisches Patentamt**
**European Patent Office**
**Office européen des brevets**

(11) **EP 4 377 173 B1**

(12) **EUROPÄISCHE PATENTSCHRIFT**

(45) Veröffentlichungstag und Bekanntmachung des Hinweises auf die Patenterteilung:
**11.03.2026   Patentblatt 2026/11**

(21) Anmeldenummer: **22772461.4**

(22) Anmeldetag: **30.08.2022**

(51) Internationale Patentklassifikation (IPC):
**B60T 8/17** *(2006.01)*      **B60T 8/172** *(2006.01)*
**B60T 17/22** *(2006.01)*

(52) Gemeinsame Patentklassifikation (CPC):
**B60T 8/1705; B60T 8/172; B60T 17/228;**
B60T 2270/406

(86) Internationale Anmeldenummer:
**PCT/EP2022/074009**

(87) Internationale Veröffentlichungsnummer:
**WO 2023/046423 (30.03.2023 Gazette 2023/13)**

(54) **VERFAHREN UND EINRICHTUNG ZUM ERMITTELN BREMSVERHALTENSRELEVANTER PARAMETER**

METHOD AND DEVICE FOR DETERMINING BRAKING-BEHAVIOR-RELEVANT PARAMETERS

PROCÉDÉ ET DISPOSITIF DE DÉTERMINATION DE PARAMÈTRES PERTINENTS POUR LE COMPORTEMENT DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **21.09.2021   DE 102021210465**

(43) Veröffentlichungstag der Anmeldung:
**05.06.2024   Patentblatt 2024/23**

(73) Patentinhaber: **Siemens Mobility GmbH**
**80997 München (DE)**

(72) Erfinder:
• **MEIERHOFER, Alexander**
**8042 Graz (AT)**
• **SIX, Klaus**
**8503 Stainztal (AT)**
• **TRUMMER, Gerald**
**8160 Mortantsch (AT)**
• **BREUER, Werner**
**80469 München (DE)**
• **JENNEK, Steffen**
**82061 Neuried (DE)**
• **YU, Minyi**
**82216 Maisach (DE)**

(74) Vertreter: **Siemens Patent Attorneys**
**Postfach 22 16 34**
**80506 München (DE)**

(56) Entgegenhaltungen:
WO-A1-2006/113954      WO-A1-2017/175108
WO-A1-2018/229638      DE-A1- 102006 057 813
US-A1- 2015 294 049

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Ermitteln zumindest eines für die Steuerung oder Regelung eines Bremssystems eines Schienenfahrzeugs bremsverhaltensrelevanten Parameters, wobei bei der Ermittlung des zumindest einen bremsverhaltensrelevanten Parameters ein physikalisches Modell herangezogen wird, das den Einfluss eines einem zu bremsenden Rad vorauslaufenden Rads berücksichtigt, und zwar hinsichtlich eines Beeinflussungseffektes, den das vorauslaufende Rad auf den Kraftschluss zwischen dem zu bremsenden nachlaufenden Rad und der Schiene ausübt.

Ein gattungsgemäßes Verfahren ist aus der Druckschrift WO 2017/175108 A1 bekannt, welche gerichtet ist auf ein Verfahren zum Steuern und Wiederherstellen der Haftung von Rädern, die zu zumindest zwei gesteuerten Achsen eines Schienenfahrzeugs gehören, während einer Radschleuderphase, umfassend die folgenden Schritte:

Erzeugen von Geschwindigkeitssignalen, welche die Winkelgeschwindigkeit der Räder angeben;
Schätzen des Werts der momentanen Haftung an der Kontaktstelle der Räder und der Schienen unter Verwendung einer Haftungsbeobachtungseinrichtung;
Erzeugen eines Zielschlupfwerts für die Räder der zumindest zwei Achsen durch einen Optimierungsalgorithmus, welcher die geschätzten Haftungswerte verarbeitet und den Zielschlupfwert kontinuierlich im Laufe der Zeit verändert, mit einem vorbestimmten Abtastzeitraum, um den Durchschnittswert der Haftung der Räder des Fahrzeugs zu maximieren.

Im Bereich der Schienenfahrzeugtechnik ist es bekannt, als dynamische Testumgebung für Fahrzeugsoftware sogenannte HardWare-in-the-Loop (HiL) Prüfstände einzusetzen. Dabei wird die reale Leittechnik-Hardware mit Fahrzeugmodellen kombiniert. Um realistische Randbedingungen für Antriebs-/Bremsszenarien umzusetzen, sind möglichst genaue bremsverhaltensrelevante Parameter bei der Simulation zu berücksichtigen. Beispielsweise für das Simulieren von Gleitschutzabnahmefahrten, die auch als Zulassungstests herangezogen werden können, sollten die Testbedingungen der EN15595 so realistisch wie möglich nachgebildet werden.

Des Weiteren ist aus der europäischen Patentschrift EP 3 331 736 B1 ein Verfahren und ein System zur Inbetriebnahme eines Bremssystems mit vorgegebenen Zulassungsvoraussetzungen bekannt. Bei diesem vorbekannten Verfahren wird anhand eines virtuellen Testbetriebs ein virtueller Steuerdatensatz dahingehend überprüft, inwieweit dieser verändert werden muss, damit das Bremssystem die vorgegebenen Zulassungsvoraussetzungen erreicht.

Der Erfindung liegt die Aufgabe zugrunde, ein sehr genaues Verfahren zum Ermitteln zumindest eines bremsverhaltensrelevanten Parameters anzugeben.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass das physikalische Modell den Einfluss von Flüssigkeit auf einer von dem zu bremsenden Rad befahrenen Schiene berücksichtigt, und zwar durch Einbezug einer auf das zu bremsende Rad einwirkenden Flüssigkeitsmenge, wobei die auf das zu bremsende Rad einwirkende Flüssigkeitsmenge berechnet wird unter Einbezug einer Flüssigkeitsreduktion, die von dem vorauslaufenden Rad hervorgerufen wird.

Ein wesentlicher Vorteil des erfindungsgemäßen Verfahrens ist darin zu sehen, dass dieses die Bestimmung bremsverhaltensrelevanter Parameter sehr genau auch in Fällen ermöglicht, beispielsweise solchen, bei denen für Testzwecke gezielt ein Wasser/Seifengemisch auf Eisenbahnschienen gespritzt wird, um vorgegebene Testszenarien gemäß Zulassungsnormen nachzubilden; denn erfindungsgemäß wird ein in solchen Fällen sehr relevanter Konditionierungseffekt, den ein oder mehr vorauslaufende Räder auf ein zu bremsendes Rad ausüben kann, gezielt berücksichtigt.

Auf der Basis der mit dem erfindungsgemäßen Verfahren ermittelten bremsverhaltensrelevanten Parameter wird beispielsweise in vorteilhafter Weise auch ein sehr realitätsnahes Simulieren von Gleitschutzabnahmefahrten nach der Norm EN15595 möglich, wodurch wiederum eine deutliche Reduktion aufwändiger und teurer realer Fahrzeugtests sowohl für die Erstinbetriebnahme als auch für Abnahmefahrten erreicht werden kann.

Die Flüssigkeitsreduktion kann beispielsweise durch Reibung des vorauslaufenden Rads auf der befahrenen Schiene oder durch auf dem rotierenden vorauslaufenden Rad haftende bzw. verbleibende Flüssigkeit hervorgerufen werden.

Auf der Basis des physikalischen Modells wird vorzugsweise eine erste Hilfskennlinie, die einen Kraftschluss in Abhängigkeit vom Schlupf bei trockener Schiene beschreibt, und eine zweite Hilfskennlinie, die den Kraftschluss in Abhängigkeit vom Schlupf bei feuchter Schiene beschreibt, für das Schienenfahrzeug definiert.

Unter Einbezug der ersten und zweiten Hilfskennlinie und eines die Flüssigkeitsmenge auf der Schiene beim Bremsen angebenden Feuchtigkeitswerts wird vorzugsweise eine zwischen der ersten und zweiten Hilfskennlinie liegende Kraftschlusskennlinie ermittelt, die den tatsächlichen Kraftschluss, der den oder zumindest einen der zu ermittelnden bremsverhaltensrelevanten Parameter bildet, im zeitlichen Verlauf beschreibt.

Die Kraftschlusskennlinie wird in besonders vorteilhafter Weise ermittelt gemäß:

$$Fx(t) = Fw((t)) \cdot HK1(Cx(t)) + (1-Fw(t)) \cdot HK2(Cx(t))$$

wobei HK1 die erste Hilfskennlinie in Abhängigkeit von dem von der Zeit t abhängigen Schlupf Cx(t), HK2 die zweite Hilfskennlinie in Abhängigkeit vom zeitabhängigen Schlupf Cx(t) und Fw den Feuchtigkeitswert beschreibt.

Die erste Hilfskennlinie HK1 wird vorzugsweise ermittelt gemäß

$$HK1 = M1(t) \cdot [Ka \cdot E1(t,Q(t))/(1+ E(t,Q(t))^2) + atan(Ks \cdot E1(t,Q(t)))]/Pi$$

wobei Ka einen dimensionslosen Reduktionsfaktor im Haftgebiet des Rad/Schiene-Kontaktbereiches, Ks einen dimensionslosen Reduktionsfaktor im Gleitgebiet des Rad/Schiene-Kontaktbereiches, Q(t) die Radaufstandskraft des zu bremsenden Rads auf einer Schiene, M1(t) eine erste Hilfsfunktion der ersten Hilfskennlinie und E1(t,Q(t)) eine zweite Hilfsfunktion der ersten Hilfskennlinie beschreiben.

Die zweite Hilfskennlinie HK2 wird vorzugsweise ermittelt gemäß

$$HK2 = M2(t) \cdot [Ka \cdot E2(t,Q(t))/(1+ E2(t,Q(t))^2) + atan(Ks \cdot E2(t,Q(t)))]/Pi$$

wobei M2(t) eine erste Hilfsfunktion der zweiten Hilfskennlinie und E2(t,Q(t)) eine zweite Hilfsfunktion der zweiten Hilfskennlinie beschreiben.

Als bremsverhaltensrelevanter Parameter oder zumindest einer der bremsverhaltensrelevanten Parameter wird vorzugsweise der Kraftschluss zwischen dem zu bremsenden Rad und einer zu befahrenden Eisenbahnschiene ermittelt.

Als bremsverhaltensrelevanter Parameter oder zumindest einer der bremsverhaltensrelevanten Parameter kann in vorteilhafter Weise alternativ oder zusätzlich ein Regelparameter für einen Schlupfregler ermittelt werden, der beim Bremsen des zu bremsenden Rads die auf das Rad einwirkende Bremskraft derart regelt, dass der tatsächliche Schlupf des Rades einem mit Hilfe der Kraftschlusskennlinie ermittelten Sollschlupf entspricht. Bei der letztgenannten Ausführungsvariante ist es somit möglich, im Rahmen von Simulationsfahrten auf der Basis des physikalischen Modells optimale Regelparameter für die Schlupfregler zu ermitteln, mit denen sich später im realen Betrieb vorgegebene Zulassungsbedingungen auch unter speziellen Testbedingungen, wie beispielsweise mit Wasser-Seifen-Gemischen benetzten Schienen, erfüllen lassen.

Der zumindest eine bremsverhaltensrelevante Parameter kann beispielsweise von einem Fahrzeugsteuergerät des Fahrzeugs ermittelt werden.

Alternativ oder zusätzlich kann der zumindest eine bremsverhaltensrelevante Parameter in vorteilhafter Weise von einer Einrichtung, beispielsweise Recheneinrichtung, außerhalb des Schienenfahrzeugs ermittelt werden.

Vorteilhaft kann der zumindest eine bremsverhaltensrelevante Parameter im Rahmen eines Verfahrens zur Inbetriebnahme eines Bremssystems des Schienenfahrzeugs, dessen Bremssystem vorgegebene Zulassungsvoraussetzungen erfüllen soll, eingesetzt werden, wobei die Erfüllung der Zulassungsvoraussetzungen unter Einbezug des zumindest einen ermittelten bremsverhaltensrelevanten Parameters simuliert wird.

Die Erfindung bezieht sich außerdem auf eine Einrichtung zum Ermitteln zumindest eines bremsverhaltensrelevanten Parameters zur Steuerung oder Regelung eines Bremssystems eines Schienenfahrzeugs gemäß Patentanspruch 10. Erfindungsgemäß ist bezüglich einer solchen Einrichtung vorgesehen, dass das physikalische Modell eingerichtet ist, den Einfluss von Flüssigkeit auf einer von dem zu bremsenden Rad befahrenen Schiene zu berücksichtigen, und zwar durch Einbezug einer auf das zu bremsende Rad einwirkenden Flüssigkeitsmenge, wobei die auf das zu bremsende Rad einwirkende Flüssigkeitsmenge berechnet wird unter Einbezug einer Flüssigkeitsreduktion, die von dem vorauslaufenden Rad hervorgerufen wird.

Bezüglich der Vorteile der erfindungsgemäßen Einrichtung und deren vorteilhafter Ausgestaltungen sei auf die obigen Ausführungen im Zusammenhang mit dem erfindungsgemäßen Verfahren und dessen vorteilhafter Ausgestaltungen verwiesen. Konkret kann die Einrichtung alle der obigen Verfahrensschritte einzeln oder in beliebiger Kombination durchführen.

Vorteilhaft ist es, wenn die Einrichtung dazu ausgebildet ist, auf der Basis eines die Feuchtigkeit auf der zu befahrenden Schiene angebenden Feuchtigkeitswerts den Kraftschluss, der einen der bremsverhaltensrelevanten Parameter bildet, in Form einer Kraftschlusskennlinie zu ermitteln und auf der Basis der ermittelten Kraftschlusskennlinie als einen weiteren bremsverhaltensrelevanten Parameter einen Regelparameter für einen Schlupfregler des Schienenfahrzeugs zu bestimmen, wobei der Schlupfregler auf der Basis dieses weiteren bremsverhaltensrelevanten Parameters durch Regeln des Schlupfes das Bremsen des Schienenfahrzeugs regelt.

Die Erfindung bezieht sich außerdem auf ein Schienenfahrzeug mit einer Einrichtung wie oben beschrieben.

Bezüglich der Vorteile des erfindungsgemäßen Schienenfahrzeugs und dessen vorteilhafter Ausgestaltungen sei auf die obigen Ausführungen im Zusammenhang mit dem erfindungsgemäßen Verfahren und dessen vorteilhafter Ausgestaltungen verwiesen.

Die Erfindung wird nachfolgend anhand von Ausführungsbeispielen näher erläutert; dabei zeigen beispielhaft

Figur 1    Hilfskennlinien über dem Schlupf für unterschiedliche Umweltbedingungen,

Figur 2    ein physikalisches Modell, das den Einfluss eines vorausrollenden Rads auf ein nachfolgendes zu bremsendes Rad beschreibt,

Figur 3    ein Ausführungsbeispiel für eine externe Einrichtung, die zum Ermitteln zumindest eines bremsverhaltensrelevanten Parameters zur Steuerung oder Regelung zumindest eines Schlupfreglers geeignet ist, und

Figur 4    ein Ausführungsbeispiel für eine fahrzeuginterne Einrichtung, die zum Ermitteln zumindest eines bremsverhaltensrelevanten Parameters zur Steuerung oder Regelung zumindest eines Schlupfreglers geeignet ist.

In den Figuren werden der Übersicht halber für identische oder vergleichbare Komponenten stets dieselben Bezugszeichen verwendet.

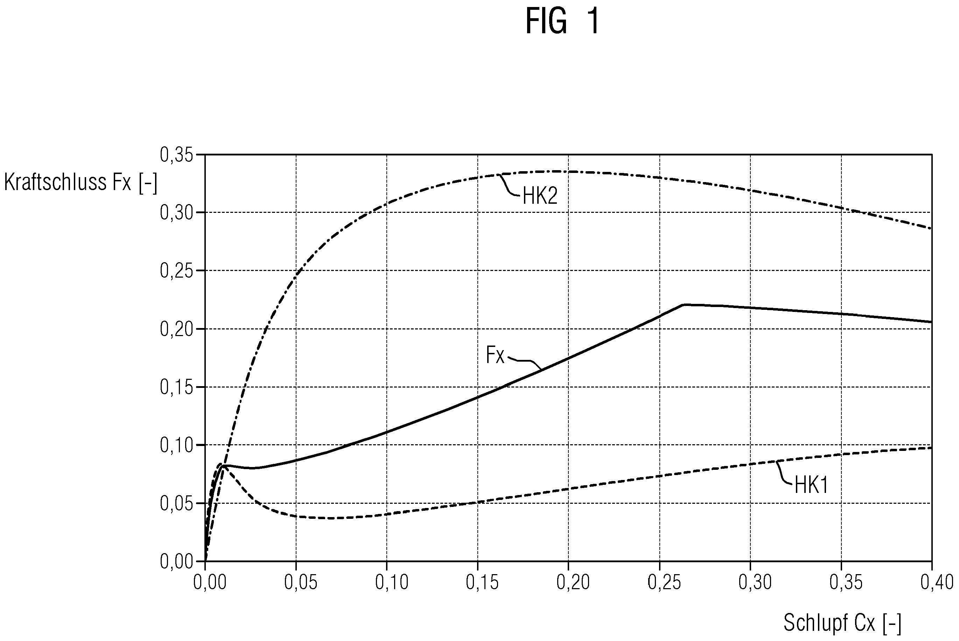

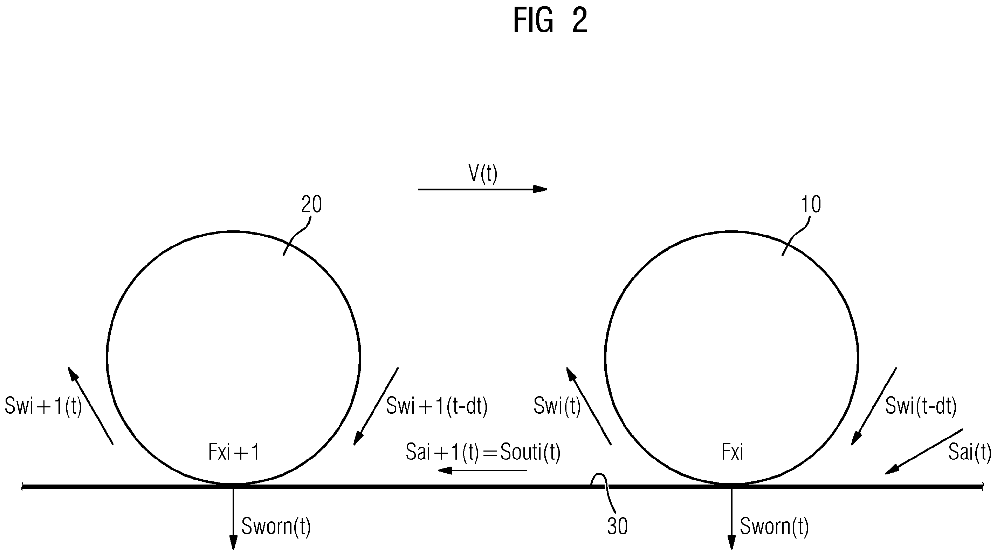

Nachfolgend wird beispielhaft im Zusammenhang mit den Figuren 1 und 2 zunächst erläutert, wie auf der Basis einer ersten und zweiten schlupfabhängigen Hilfskennlinie HK1 und HK2 (siehe Figur 1) und eines Flüssigkeitswerts Fw, der die Feuchtigkeit auf einer Schiene 30 gemäß Figur 2 angibt, als zumindest ein bremsverhaltensrelevanter Parameter der Kraftschluss Fx für zwei oder mehr Räder ermittelt werden kann, wobei der Einfluss des vorausrollenden Rads (siehe Bezugszeichen 10 in Figur 2) auf das jeweils nachfolgende Rad (vgl. Bezugszeichen 20 in Figur 2) berücksichtigt wird. Der Kraftschluss Fx wird während einer Fahrt im zeitlichen Verlauf schwanken und bildet somit im zeitlichen Verlauf eine Kraftschlusskennlinie Fx(t).

Die zwei Hilfskennlinien HK1 und HK2 beschreiben jeweils den Kraftschluss Fx in Abhängigkeit vom jeweiligen Schlupf Cx, wobei die erste Hilfskennlinie HK1 den Kraftschluss Fx in Abhängigkeit vom Schlupf Cx bei trockener Schiene beschreibt und die zweite Hilfskennlinie HK2 den Kraftschluss Fx in Abhängigkeit vom Schlupf Cx bei feuchter Schiene beschreibt. Die Figur 1 zeigt beispielhaft den Verlauf der beiden Hilfskennlinien HK1 und HK2 über dem Schlupf Cx.

Die Kraftschlusskennlinie Fx(t) des Kraftschlusses Fx über der Zeit t wird unter Heranziehung der zwei Hilfskennlinien HK1 und HK2 in Abhängigkeit von dem jeweiligen von der Zeit t abhängigen Flüssigkeitswert Fw und dem ebenfalls zeitabhängigen Schlupf Cx(t) vorzugsweise berechnet gemäß

$$\mathrm{Fx(t) = Fw(t) \cdot HK1(Cx(t)) + (1-Fw(t)) \cdot HK2(Cx(t))}$$

a) Berechnung der zwei Hilfskennlinien HK1 und HK2:

In einem ersten Schritt wird für die erste Hilfskennlinie HK1 eine Hilfsfunktion M1(t) und für zweite Hilfskennlinie HK2 eine Hilfsfunktion M2(t) über der Zeit t ermittelt gemäß

$$\mathrm{M1(t) = M01 \cdot [(1-A1) \, / \, exp(-B1 \cdot V(t)) + A1]}$$

$$\mathrm{M2(t) = M02 \cdot [(1-A2) \, / \, exp(-B2 \cdot V(t)) + A2]}$$

wobei M01 das Maximum eines dimensionslosen Kraftschlussbeiwertes bezeichnet, der für die erste Hilfskennlinie HK1 einen Wert von beispielsweise M01 = 0,08 annehmen kann. M02 bezeichnet das Maximum eines dimensionslosen Kraftschlussbeiwertes für die zweite Hilfskennlinie HK2 und kann beispielsweise einen Wert von 0,35 annehmen.

A1 bzw. A2 bezeichnet das Verhältnis zwischen dem Minimum des jeweiligen Kraftschlussbeiwertes und dem Maximum des jeweiligen Kraftschlussbeiwertes für die jeweilige erste bzw. zweite Hilfskennlinie HK1 und HK2. Für die erste Hilfskennlinie HK1 kann das Verhältnis A in der Größenordnung von 0,1 liegen und für die zweite Hilfskennlinie HK2 in der Größenordnung von 0,2.

B1 und B2 bezeichnen jeweils einen dimensionslosen Faktor einer exponentiellen Reduktion des Abfalls des Kraftschlusses bei ansteigenden Schlupfwerten. Für die erste Hilfskennlinie HK1 kann der Faktor B1 in der Größenordnung von 0,3 und für die zweite Hilfskennlinie HK2 in der Größenordnung von 0,2 liegen.

V(t) bezeichnet die translatorische Geschwindigkeit der Räder 10 und 20 in Fahrzeuglängsrichtung über der Zeit t.

In einem zweiten Schritt wird für die erste Hilfskennlinie HK1 jeweils eine zweite Hilfsfunktion E1(t,Q(t)) und für die zweite Hilfskennlinie HK2 eine zweite Hilfsfunktion E2(t,Q(t)) ermittelt gemäß

$$E1(t,Q(t)) = Pi \cdot G \cdot Ah \cdot Bh \cdot C\_11 \cdot Cx(t) / (4 \cdot Q(t) \cdot M1(t))$$

$$E2(t,Q(t)) = Pi \cdot G \cdot Ah \cdot Bh \cdot C\_11 \cdot Cx(t) / (4 \cdot Q(t) \cdot M2(t))$$

wobei Pi die Kreiszahl bzw. Archimedes-Konstante, G ein Schubmodul des Rads (z. B. in Pa), Ah und Bh die Halbachsen der Kontaktellipsen des Rads auf der Schiene (z. B. in Metern), C_11 den sogenannten Kalker-Schlupfkoeffizienten in Längsrichtung, Cx den Schlupf des Rads und Q die Radaufstandskraft des Rads auf der Schiene (z. B. in Newton) beschreiben.

Mit M1(t) bzw. M2(t) und E1(t,Q(t)) bzw. E2(t,Q(t)) lassen sich dann die erste und zweite Hilfskennlinie HK1 und HK2 berechnen gemäß

$$HK1 = M1(t) \cdot [Ka \cdot E1(t,Q(t)) / (1+ E1(t,Q(t))^2) + atan(Ks \cdot E1(t,Q(t)))] / Pi$$

$$HK2 = M2(t) \cdot [Ka \cdot E2(t,Q(t)) / (1+ E2(t,Q(t))^2) + atan(Ks \cdot E2(t,Q(t)))] / Pi$$

Ka bezeichnen dabei dimensionslose Reduktionsfaktoren im Haftgebiet des Rad/Schiene-Kontaktbereiches und Ks dimensionslose Reduktionsfaktoren im Gleitgebiet des Rad/Schiene-Kontaktbereiches.

b) Berechnung des Flüssigkeitswerts Fw:

(1) Vorderes Rad 10 (vgl. Figur 2):

Der Flüssigkeitswert Fw, der zum Verknüpfen der beiden Hilfskurven HK1 und HK2 zwecks Bildung der Kraftschlusskennlinie Fx(t) herangezogen wird, wird vorzugsweise berechnet für das in Fahrtrichtung auf einer Schiene 30 vordere i-te Rad 10 gemäß

$$Fwi(t) = 1 / [1+exp\{-Kb \cdot (Swi(t-dt) + Sai(t)) / Smax(t) - 0.5\}]$$

Sai bezeichnet eine vor dem vorderen Rad 10 zugefügte Flüssigkeitsmenge, die beispielsweise für eine Testfahrt vor dem vorderen Rad 30 auf die Schiene gespritzt wird. Sa lässt sich wie folgt berechnen:

$$Sai(t) = Kad \cdot 1 / (V(t) \cdot Bh) \cdot dV\_liquid/dt$$

wobei Kad dimensionsloser Parameter, Bh der Halbachslänge der Kontaktellipse in Fahrtrichtung, V(t) die translatorische Geschwindigkeit des Rads in Fahrzeuglängsrichtung und dV_liquid/dt die Flüssigkeitsrate für den Fall einer Flüssigkeitszugabe bezeichnen.

Smax bezeichnet die maximale Flüssigkeitsmenge unter dem Rad 30 und lässt sich ermitteln gemäß

$$Smax(t) = min(Kmax/V(t), K\_lim)$$

wobei Kmax und K_lim dimensionslose Parameter bezeichnen.

Swi bezeichnet die Flüssigkeitsmenge unter dem i-ten Rad 30 und lässt sich berechnen gemäß:

$$Swi(t) = [min(Swi(t-dt)+Sai(t),Smax(t))-Sworn(t)] \cdot K\_distr$$

wobei Swi(t-dt) die Flüssigkeitsmenge unter dem i-ten Rad 30 bezeichnet, die zum Zeitpunkt t-dt (dt: Zeitdauer einer Radumdrehung) vorhanden war und zumindest zum Teil nach der nächsten Radumdrehung wieder zur Radauflagefläche zurückgeführt wird.

Sworn bezeichnet die durch Verdunstung oder dergleichen verbrauchte Flüssigkeitsmenge, also die verloren gegangene Flüssigkeitsmenge. K_distr bezeichnet einen dimensionslosen Parameter.

Sworn lässt sich berechnen gemäß:

$$\texttt{Sworn(t) = Kworn} \cdot \texttt{Wfriction(t)}$$

wobei Kworn einen dimensionslosen Parameter und Wfriction die Reibarbeit des Rades beispielsweise in Nm (Newton Meter) angibt.

Für das i-te Rad 10 ergibt sich die Kraftschlusskennlinie Fxi(t) somit gemäß:

$$\texttt{Fxi(t) = Fwi(t)} \cdot \texttt{HK1(t) + (1-Fwi(t))} \cdot \texttt{HK2(t)}$$

<u>(2) Nachfolgendes Rad 20:</u>

Für das dem i-ten Rad 10 nachfolgende (i+1)-te Rad 20 wird der Flüssigkeitswert Fwi+1, der zum Verknüpfen der beiden Hilfskurven HK1 und HK2 herangezogen wird, vorzugsweise berechnet gemäß

$$\texttt{Fwi+1(t) = 1/[1+exp\{-Kb} \cdot \texttt{(Swi+1(t-dt)+Sai+1(t))/Smax(t)-0.5\}]}$$

Swi+1(t) berechnet sich für das nachfolgende Rad 20 wie Swi(t), also genauso, wie dies für das i-te Rad 10 oben erläutert worden ist.

Unter der Annahme, dass dem (i+1)-ten Rad 20 von extern keine zusätzliche Flüssigkeitsmenge zugefügt wird, ergibt sich Sai+1 ausschließlich aus der Flüssigkeitsmenge, die das i-te Rad 10 auf der Schiene 30 zurückgelassen hat; es gilt in diesem Falle also

$$\texttt{Sai+1(t) = Souti(t)}$$

wobei Souti die vom i-ten Rad 10 zurückgelassene Flüssigkeitsmenge beschreibt und sich beispielsweise berechnen lässt gemäß

$$\texttt{Souti(t) = Kdistr} \cdot \texttt{(Sai(t)+Srail(t))}$$

Mit Srail(t) = Swi(t)·(1/Kdistr-1) gilt dann:

$$\texttt{Sai+1(t) = Souti(t) = Kdistr} \cdot \texttt{(Sai(t) + Swi(t)} \cdot \texttt{(1/Kdistr-1))}$$

Für weitere nachfolgende Räder ohne externe Flüssigkeitszufuhr, also für das (i+2)-te Rad, usw. würde sich eine entsprechende Berechnung wie für das (i+1)-te Rad ergeben, unter der Maßgabe, dass sich Sai jeweils aus der zurückgelassenen Flüssigkeitsmenge des vorauslaufenden Rads ergibt. Für das (i+2)-te Rad würde sich somit beispielsweise ergeben

$$\texttt{Sai+2(t) = Souti+1(t)}$$

Die Kraftschlusskennlinie Fxi+1(t) für das nachfolgende (i+1)-te Rad 20 errechnet sich dann gemäß:

$$\texttt{Fxi+1(t) = Fwi+1(t)} \cdot \texttt{HK1(t) + (1-Fwi+1(t))} \cdot \texttt{HK2(t)}$$

Zusammengefasst berücksichtigt das oben im Zusammenhang mit den Figuren 1 und 2 beschriebene physikalische Modell zur Kraftschlussermittlung also, dass ein vorauslaufendes i-tes Rad 10 die auf das nachfolgende (i+1)-te Rad 20 einwirkende Flüssigkeitsmenge beeinflusst, weil ein Anteil der für das vorauslaufende i-te Rad relevanten Flüssigkeitsmenge (vgl. Anteil Kdistr·Swi(t) in den obigen Formeln) am vorauslaufenden i-ten Rad verbleibt und mit diesem weiterrotiert und ein anderer Anteil Sworn(t) wegen der Reibarbeit des i-ten Rades verloren geht.

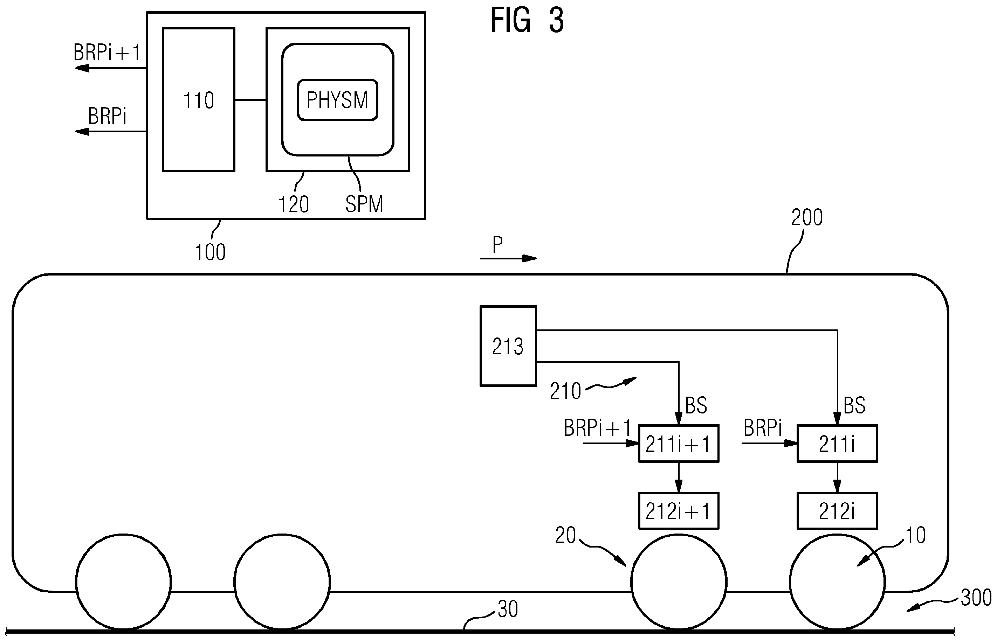

Das oben im Zusammenhang mit den Figuren 1 und 2 beschriebene physikalische Modell kann beispielsweise von einer Einrichtung 100 (siehe Figur 3) genutzt werden.

Die Einrichtung 100 gemäß Figur 3 umfasst eine Recheneinrichtung 110 und einen Speicher 120, in dem ein Softwaremodul SPM abgespeichert ist. Das Softwareprogrammmodul SPM bestimmt bei Ausführung durch die Recheneinrichtung 110 die Arbeitsweise der Einrichtung 100, zumindest aber bestimmt sie die Arbeitsweise mit.

Bei Ausführung des Softwaremoduls SPM durch die Recheneinrichtung 110 führt die Einrichtung 100 vorzugsweise zunächst ein Verfahren aus, mit dem auf der Basis des oben beschriebenen und in der Figur 3 mit dem Bezugszeichen PHYSM bezeichneten physikalischen Modells für die Räder 10 und 20 eines Schienenfahrzeugs 200 zunächst die Kraftschlusskennlinien Fxi(t) und Fxi+1(t) berechnet werden. Die Kraftschlusskennlinien Fxi(t) und Fxi+1(t) beschreiben jeweils den Kraftschluss Fx als primäre bremsverhaltensrelevante Parameter im zeitlichen Verlauf.

Liegen die Kraftschlusskennlinien Fxi(t) und Fxi+1(t) vor, so kann durch weitere Simulation eine Fahrt des Schienenfahrzeugs 200 auf einer vorgegebenen Strecke 300 im zeitlichen Verlauf nachgebildet werden. Auf der Basis der Simulationsergebnisse solcher simulierter Fahrten können beispielsweise unter anderem als weitere (sekundäre) bremsverhaltensrelevante Parameter geeignete Regelparameter BRPi und BRPi+1 zur Steuerung oder Regelung von Schlupfreglern 211i und 211i+1 eines Bremssystems 210 des Schienenfahrzeugs 200 errechnet werden.

Die Schlupfregler 211i und 211i+1 werden bei dem Ausführungsbeispiel gemäß Figur 3 von einem Bremssteuergerät 213 des Bremssystems 210 mittels eines Bremssignals BS betätigt.

Bei der Simulation der Fahrt bzw. Fahrten des Schienenfahrzeugs 200 auf der Strecke 300 und bei der Ermittlung der weiteren bremsverhaltensrelevanten Parameter BRPi und BRPi+1 wird wegen der Verwendung der Kraftschlusskennlinien Fxi(t) und Fxi+1(t) wieder zumindest mittelbar das physikalische Modell PHYSM herangezogen, wie es oben im Zusammenhang mit den Figuren 1 und 2 beschrieben worden ist, da mit diesem bei der Fahrtsimulation der Kraftschluss Fx zwischen den Rädern 10 und 20 und der Schiene 30 berücksichtigt wird.

Unter Heranziehung des physikalischen Modells PHYSM kann somit beispielsweise eine Fahrt unter Einbezug virtuell zugefügter Flüssigkeitsmengen simuliert werden, die beispielsweise in Fahrtrichtung P vor das i-te (z.B. i=1) Rad 10 gespritzt werden. Im Rahmen der Simulation bzw. Simulationen können dann in vorteilhafter Weise geeignete oder sogar optimale Zahlenwerte für die Parameter BRPi und BRPi+1 bestimmt werden, die im realen (späteren) Betrieb als Regelparameter in den Schlupfreglern 211i und 211i+1 für den Bremsbetrieb des Schienenfahrzeugs 200 verwendet werden können.

Bei der in der Figur 3 gezeigten Ausführungsvariante ist die Einrichtung 100 vorzugsweise eine externe Einrichtung, die vor der ersten Inbetriebnahme eines realen Schienenfahrzeugs oder zumindest vor Durchführung einer realen Testfahrt des Schienenfahrzeugs 200 testet, ob das Schienenfahrzeug 200 vorgegebene Zulassungsvoraussetzungen erfüllen würde. Zu diesem Zweck berechnet sie zunächst den oder die bremsverhaltensrelevanten Parameter und simuliert anschließend auf deren Basis Testfahrten des Schienenfahrzeug 200. Im Rahmen der Simulationen und Tests ermittelt sie, beispielsweise durch rechnerisches Ausprobieren, geeignete bremsverhaltensrelevante Steuer- oder Regelparameter für das Bremssystem 210, beispielsweise die Parameter BRPi und BRPi+1 für die Schlupfregler 211i und 211i+1, mit denen die Zulassungsvoraussetzungen erfüllt werden. Anschließend werden die durch die Simulation ermittelten bremsverhaltensrelevanten Steuer- oder Regelparameter im realen Schienenfahrzeug implementiert. Reale Testfahrten können nach dieser Implementierung mit dem realen Schienenfahrzeug durchgeführt werden.

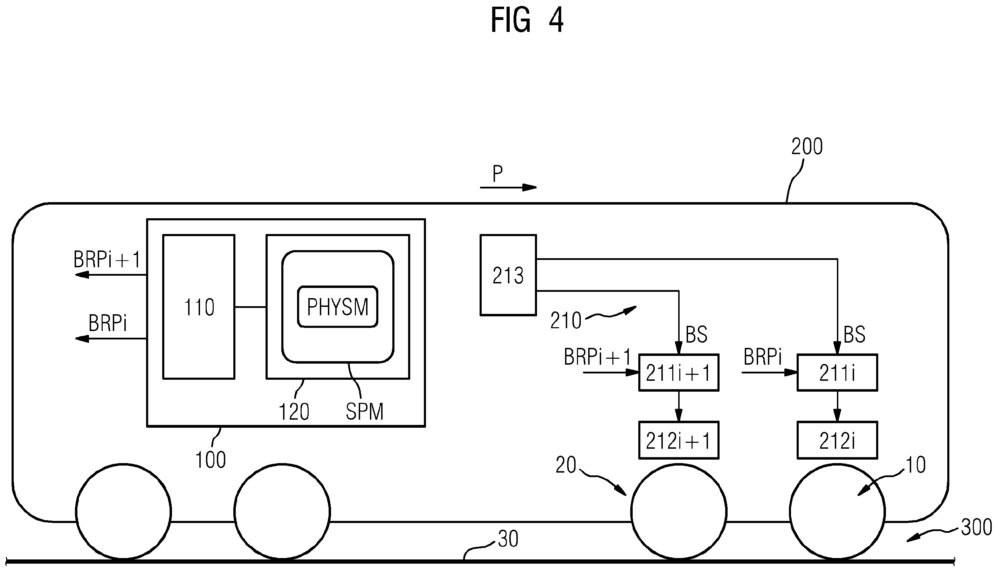

Die Figur 4 zeigt eine alternative Ausführungsvariante, bei der die in Figur 3 gezeigte Einrichtung 100 eine interne Einrichtung des Schienenfahrzeugs 200 ist und beispielsweise durch ein Fahrzeugsteuergerät des Schienenfahrzeugs 200 gebildet wird oder in ein nicht weiter gezeigtes Fahrzeugsteuergerät integriert ist. Die interne Einrichtung 100 kann vor oder auch während der Fahrt den oder die bremsverhaltensrelevanten Parameter simulieren und festlegen, beispielsweise auch unter Einbezug weiterer fahrtaktueller Parameter wie beispielsweise Temperatur oder Regen. Bei den bremsverhaltensrelevanten Parametern kann es sich wieder um Regelparameter für die Schlupfregler 211i oder 211i+1 handeln, die auf die jeweils zugeordnete Bremse 212i oder 212i+1 des Schienenfahrzeugs 200 einwirken und die Bremskraft der zugeordneten Bremse regeln.

Das im Zusammenhang mit den Figuren 1 und 2 beschriebene physikalische Kraftschlussmodell macht es in vorteilhafter Weise möglich, Kraftschlussbedingungen der Räder auch auf einem Wasser/Seifengemisch bzw. einer mit einem Wasser/Seifengemisch benetzten Schiene nachzubilden. Dabei kann, wie beschrieben, der Konditionierungseffekt durch vorausrollende Räder berücksichtigt werden, der zu einer Erhöhung des Kraftschlusses und entsprechend geänderten Schlupfwerten bei nachfolgenden Rädern führen kann, weil vorausrollende Räder das Wasser/Seifengemisch verändern bzw. mengenmäßig reduzieren.

Das im Zusammenhang mit den Figuren 1 und 2 beschriebene physikalische Modell ermöglicht beispielsweise das Simulieren von Gleitschutzabnahmefahrten nach der Norm EN15595. Dadurch ist eine deutliche Reduktion aufwändiger und teurer Fahrzeugtests im Zuge der Erstinbetriebnahme oder bei Abnahmefahrten möglich.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die nachfolgenden Ansprüche definierten Schutzumfang der Erfindung zu verlassen.

**Patentansprüche**

1. Verfahren zum Ermitteln zumindest eines für die Steuerung oder Regelung eines Bremssystems (210) eines Schienenfahrzeugs (200) bremsverhaltensrelevanten Parameters,

   wobei bei der Ermittlung des zumindest einen bremsverhaltensrelevanten Parameters ein physikalisches Modell (PHYSM) herangezogen wird, das den Einfluss eines einem zu bremsenden Rad (20) vorauslaufenden Rads (10) berücksichtigt, und zwar hinsichtlich eines Beeinflussungseffektes, den das vorauslaufende Rad (10) auf den Kraftschluss zwischen dem zu bremsenden nachlaufenden Rad (20) und der Schiene (30) ausübt,
   **dadurch gekennzeichnet, dass**

   - das physikalische Modell (PHYSM) den Einfluss von Flüssigkeit auf einer von dem zu bremsenden Rad (20) befahrenen Schiene (30) berücksichtigt, und zwar durch Einbezug einer auf das zu bremsende Rad (20) einwirkenden Flüssigkeitsmenge,
   - wobei die auf das zu bremsende Rad (20) einwirkende Flüssigkeitsmenge berechnet wird unter Einbezug einer Flüssigkeitsreduktion, die von dem vorauslaufenden Rad (10) hervorgerufen wird.

2. Verfahren nach Anspruch 1,
   **dadurch gekennzeichnet, dass**

   - auf der Basis des physikalischen Modells (PHYSM) eine erste Hilfskennlinie (HK1), die einen Kraftschluss in Abhängigkeit vom Schlupf bei trockener Schiene (30) beschreibt, und eine zweite Hilfskennlinie (HK2), die den Kraftschluss in Abhängigkeit vom Schlupf bei feuchter Schiene (30) beschreibt, für das Schienenfahrzeug (200) errechnet wird und
   - unter Einbezug der ersten und zweiten Hilfskennlinie (HK1, HK2) und eines die Flüssigkeitsmenge auf der Schiene (30) beim Bremsen angebenden Feuchtigkeitswerts eine zwischen der ersten und zweiten Hilfskennlinie (HK1) liegende Kraftschlusskennlinie ermittelt wird, die den tatsächlichen Kraftschluss, der den oder zumindest einen der zu ermitteln den bremsverhaltensrelevanten Parameter bildet, im zeitlichen Verlauf beschreibt.

3. Verfahren nach Anspruch 2,
   **dadurch gekennzeichnet, dass**

   die Kraftschlusskennlinie ermittelt wird gemäß

   $$\text{Fx(t)} = \text{Fw(t)} \cdot \text{HK1(Cx(t))} + (1-\text{Fw(t)}) \cdot \text{HK2(Cx(t))}$$

   wobei HK1 die erste Hilfskennlinie in Abhängigkeit von dem von der Zeit t abhängigen Schlupf Cx, HK2 die zweite Hilfskennlinie in Abhängigkeit vom zeitabhängigen Schlupf Cx(t) und Fw den Feuchtigkeitswert beschreibt.

4. Verfahren nach einem der voranstehenden Ansprüche 2-3,
   **dadurch gekennzeichnet, dass**

   die erste Hilfskennlinie HK1 ermittelt wird gemäß

   $$\text{HK1} = \text{M1(t)} \cdot [\text{Ka} \cdot \text{E1(t,Q(t))}/(1+ \text{E1(t,Q(t))}^2) + \text{atan(Ks} \cdot \text{E1(t,Q(t)))}]/\text{Pi}$$

   wobei Ka einen dimensionslosen Reduktionsfaktor im Haftgebiet des Rad/Schiene-Kontaktbereiches, Ks einen dimensionslosen Reduktionsfaktor im Gleitgebiet des Rad/Schiene-Kontaktbereiches, Q die Radaufstandskraft des zu bremsenden Rads (20) auf einer Schiene (30), M1(t) eine erste Hilfsfunktion der ersten Hilfskennlinie (HK1) und E1(t) eine zweite Hilfsfunktion der ersten Hilfskennlinie (HK1) beschreiben.

5. Verfahren nach einem der voranstehenden Ansprüche 2-4,
   **dadurch gekennzeichnet, dass**

die zweite Hilfskennlinie (HK2) ermittelt wird gemäß

$$HK2 = M2(t) \cdot [Ka \cdot E2(t,Q(t))/(1+ E2(t,Q(t))^2) + atan(Ks \cdot E2(t,Q(t)))]/Pi$$

wobei Ka einen dimensionslosen Reduktionsfaktor im Haftgebiet des Rad/Schiene-Kontaktbereiches, Ks einen dimensionslosen Reduktionsfaktor im Gleitgebiet des Rad/Schiene-Kontaktbereiches, Q die Radaufstandskraft des zu bremsenden Rads (20) auf einer Schiene (30), M2(t) eine erste Hilfsfunktion der zweiten Hilfskennlinie (HK2) und E2(t) eine zweite Hilfsfunktion der zweiten Hilfskennlinie (HK2) beschreiben.

6. Verfahren nach einem der voranstehenden Ansprüche,
**dadurch gekennzeichnet, dass**
als bremsverhaltensrelevanter Parameter oder zumindest einer der bremsverhaltensrelevanten Parameter der Kraftschluss zwischen dem zu bremsenden Rad (20) und einer Eisenbahnschiene (30) ermittelt wird.

7. Verfahren nach einem der voranstehenden Ansprüche,
**dadurch gekennzeichnet, dass**
als bremsverhaltensrelevanter Parameter oder zumindest einer der bremsverhaltensrelevanten Parameter ein Regelparameter für einen Schlupfregler (211i+1) ermittelt wird, der beim Bremsen des zu bremsenden Rads (20) die auf das Rad (20) einwirkende Bremskraft derart regelt, dass der tatsächliche Schlupf des Rades einem mit Hilfe der Kraftschlusskennlinie ermittelten Sollschlupf entspricht.

8. Verfahren nach einem der voranstehenden Ansprüche,
**dadurch gekennzeichnet, dass**
der zumindest eine bremsverhaltensrelevante Parameter von einem Fahrzeugsteuergerät des Fahrzeugs ermittelt wird.

9. Verfahren nach einem der voranstehenden Ansprüche,
**dadurch gekennzeichnet, dass**

- der zumindest eine bremsverhaltensrelevante Parameter von einer Einrichtung (100) außerhalb des Schienenfahrzeugs (200) ermittelt wird und im Rahmen eines Verfahrens zur Inbetriebnahme eines Bremssystems (210) des Schienenfahrzeugs (200), dessen Bremssystem vorgegebene Zulassungsvoraussetzungen erfüllen soll, eingesetzt wird,
- wobei die Erfüllung der Zulassungsvoraussetzungen unter Einbezug des zumindest einen ermittelten bremsverhaltensrelevanten Parameters simuliert wird.

10. Einrichtung (100) zum Ermitteln zumindest eines bremsverhaltensrelevanten Parameters zur Steuerung oder Regelung eines Bremssystems (210) eines Schienenfahrzeugs (200),

wobei die Einrichtung (100) dazu ausgestaltet ist, bei der Ermittlung des Parameters ein physikalisches Modell (PHYSM) heranzuziehen, das den Einfluss eines einem zu bremsenden Rad (20) vorauslaufenden Rads (10) berücksichtigt, und zwar hinsichtlich eines Beeinflussungseffektes, den das vorauslaufende Rad (10) auf den Kraftschluss zwischen dem zu bremsenden nachlaufenden Rad (20) und der Schiene (30) ausübt,
**dadurch gekennzeichnet, dass**

- das physikalische Modell (PHYSM) eingerichtet ist, den Einfluss von Flüssigkeit auf einer von dem zu bremsenden Rad (20) befahrenen Schiene (30) zu berücksichtigen, und zwar durch Einbezug einer auf das zu bremsende Rad (20) einwirkenden Flüssigkeitsmenge,
- wobei die auf das zu bremsende Rad (20) einwirkende Flüssigkeitsmenge berechnet wird unter Einbezug einer Flüssigkeitsreduktion, die von dem vorauslaufenden Rad (10) hervorgerufen wird.

11. Einrichtung (100) nach Anspruch 10,
**dadurch gekennzeichnet, dass**

- die Einrichtung (100) dazu ausgebildet ist, auf der Basis eines die Feuchtigkeit auf der zu befahrenden Schiene (30) angebenden Feuchtigkeitswerts den Kraftschluss, der einen der bremsverhaltensrelevanten Parameter bildet, in Form einer Kraftschlusskennlinie zu ermitteln und auf der Basis der ermittelten Kraftschlusskennlinie als einen weiteren bremsverhaltensrelevanten Parameter einen Regelparameter für einen Schlupfregler (211i, 211i+1) des Schienenfahrzeugs (200) zu bestimmen,
- wobei der Schlupfregler (211i, 211i+1) auf der Basis dieses weiteren bremsverhaltensrelevanten Parameters durch Regeln des Schlupfes das Bremsen des Schienenfahrzeugs (200) regelt.

12. Schienenfahrzeug (200) mit einer Einrichtung (100) nach Anspruch 10 oder 11.

13. Schienenfahrzeug (200) nach Anspruch 12,
**dadurch gekennzeichnet, dass**

- die Einrichtung (100) dazu ausgebildet ist, auf der Basis eines die Feuchtigkeit auf der zu befahrenden Schiene (30) angebenden Feuchtigkeitswerts den Kraftschluss, der einen der bremsverhaltensrelevanten Parameter bildet, in Form einer Kraftschlusskennlinie zu ermitteln und auf der Basis der ermittelten Kraftschlusskennlinie als einen weiteren bremsverhaltensrelevanten Parameter einen Regelparameter für einen Schlupfregler (211i, 211i+1) des Schienenfahrzeugs (200) zu bestimmen,
- wobei der Schlupfregler (211i, 211i+1) auf der Basis dieses weiteren bremsverhaltensrelevanten Parameters durch Regeln des Schlupfes das Bremsen des Schienenfahrzeugs (200) regelt.

## Claims

1. Method for determining at least one braking-behaviour-relevant parameter for the control or regulation of a braking system (210) of a rail vehicle (200),

   wherein a physical model (PHYSM) is used in the determining of the at least one braking-behaviour-relevant parameter, the physical model taking into account the influence of a wheel (10) leading a wheel (20) to be braked, specifically with respect to an influence effect which the leading wheel (10) has on the adhesion between the trailing wheel (20) to be braked and the rail (30),
   **characterised in that**

      - the physical model (PHYSM) takes into account the influence of liquid on a rail (30) travelled by the wheel (20) to be braked, namely by taking into account a quantity of liquid acting on the wheel (20) to be braked,
      - wherein the quantity of liquid acting on the wheel (20) to be braked is calculated by taking into account a liquid reduction caused by the leading wheel (10).

2. Method according to claim 1,
   **characterised in that**

      - on the basis of the physical model (PHYSM), a first auxiliary characteristic (HK1), which describes an adhesion as a function of slippage when the rail (30) is dry, and a second auxiliary characteristic (HK2), which describes the adhesion as a function of slippage when the rail (30) is wet, are calculated for the rail vehicle (200) and
      - taking into account the first and second auxiliary characteristic (HK1, HK2) and a moisture value indicating the amount of liquid on the rail (30) during braking, an adhesion characteristic lying between the first and second auxiliary characteristic (HK1) is determined, which represents the actual adhesion, which forms the or at least one of the braking-behaviour-relevant parameters to be determined, over time.

3. Method according to claim 2,
   **characterised in that**

   the adhesion characteristic is determined according to

   $$Fx(t) = Fw(t) \cdot HK1(Cx(t)) + (1-Fw(t)) \cdot HK2(Cx(t))$$

   where HK1 describes the first auxiliary characteristic as a function of the time t-dependent slippage Cx, HK2 the second auxiliary characteristic as a function of the time-dependent slippage Cx(t) and Fw the moisture value.

4. Method according to one of the preceding claims 2-3,

**characterised in that**

the first auxiliary characteristic HK1 is determined according to

```
HK1 = M1(t)• [Ka•E1(t,Q(t))/(1+ E1(t,Q(t)) 2) +
atan(Ks•E1(t,Q(t)))]/Pi
```

where Ka describes a dimensionless reduction factor in the adhesion region of the wheel/rail contact area, Ks a dimensionless reduction factor in the slippage region of the wheel/rail contact area, Q the wheel contact force of the wheel (20) to be braked on a rail (30), M1(t) a first auxiliary function of the first auxiliary characteristic (HK1) and E1(t) a second auxiliary function of the first auxiliary characteristic (HK1).

5. Method according to one of the preceding claims 2-4,
   **characterised in that**

   the second auxiliary characteristic (HK2) is determined according to

```
HK2 = M2(t)  • [Ka•E2(t,Q(t))/(1+ E2(t,Q(t))2) +
atan(Ks•E2(t,Q(t)))]/Pi
```

   where Ka describes a dimensionless reduction factor in the adhesion region of the wheel/rail contact area, Ks a dimensionless reduction factor in the slippage region of the wheel/rail contact area, Q the wheel contact force of the wheel (20) to be braked on a rail (30), M2(t) a first auxiliary function of the second auxiliary characteristic (HK2) and E2(t) a second auxiliary function of the second auxiliary characteristic (HK2).

6. Method according to one of the preceding claims,
   **characterised in that**
   the adhesion between the wheel (20) to be braked and a railroad track (30) is determined as the braking-behaviour-relevant parameter or at least one of the braking-behaviour-relevant parameters.

7. Method according to one of the preceding claims,
   **characterised in that**
   as a braking-behaviour-relevant parameter or at least one of the braking-behaviour-relevant parameters, a control parameter for a slip controller (211i+1) is determined, which when braking the wheel (20) to be braked regulates the braking force acting on the wheel (20) in such a way that the actual slippage of the wheel corresponds to a target slippage determined using the adhesion characteristic.

8. Method according to one of the preceding claims,
   **characterised in that**
   the at least one braking-behaviour-relevant parameter is determined by a vehicle control device of the vehicle.

9. Method according to one of the preceding claims,
   **characterised in that**

   - the at least one braking-behaviour-relevant parameter is determined by a facility (100) outside the rail vehicle (200) and is used as part of a method for putting into service a braking system (210) of the rail vehicle (200) whose braking system is intended to meet specified approval requirements,
   - wherein the fulfilment of the approval requirements is simulated taking into account the at least one determined braking-behaviour-relevant parameter.

10. Facility (100) for determining at least one braking-behaviour-relevant parameter for controlling or regulating a braking system (210) of a rail vehicle (200),

   wherein the facility (100) is designed to use a physical model (PHYSM) when determining the parameter, the physical model taking into account the influence of a wheel (10) which leads a wheel (20) to be braked, specifically with respect to an influence effect which the leading wheel (10) has on the adhesion between the trailing wheel (20) to be braked and the rail (30),

**characterised in that**

- the physical model (PHYSM) is configured to take into account the influence of liquid on a rail (30) travelled by the wheel (20) to be braked, namely by taking into account a quantity of liquid acting on the wheel (20) to be braked,
- wherein the quantity of liquid acting on the wheel (20) to be braked is calculated taking into account a liquid reduction caused by the leading wheel (10).

11. Facility (100) according to claim 10,

**characterised in that**

- the facility (100) is designed to determine the adhesion, which forms one of the braking-behaviour-relevant parameters, in the form of an adhesion characteristic on the basis of a moisture value indicating the moisture on the rail (30) to be travelled on, and to determine a control parameter for a slip controller (211i, 211i+1) of the rail vehicle (200) on the basis of the determined adhesion characteristic as a further braking-behaviour-relevant parameter,
- wherein the slip controller (211i, 211i+1) regulates the braking of the rail vehicle (200) on the basis of this further braking-behaviour-related parameter by regulating the slippage.

12. Rail vehicle (200) having a facility (100) according to claim 10 or 11.

13. Rail vehicle (200) according to claim 12,

**characterised in that**

- the facility (100) is designed to determine the adhesion, which forms one of the braking-behaviour-relevant parameters, in the form of an adhesion characteristic on the basis of a moisture value indicating the moisture on the rail (30) to be travelled on, and to determine a control parameter for a slip controller (211i, 211i+1) of the rail vehicle (200) on the basis of the determined adhesion characteristic as a further braking-behaviour-relevant parameter,
- wherein the slip controller (211i, 211i+1) regulates the braking of the rail vehicle (200) on the basis of this further braking-behaviour-related parameter by regulating the slippage.

**Revendications**

1. Procédé de détermination d'au moins un paramètre, pertinent pour le comportement de freinage, de commande ou de réglage d'un système (210) de freinage d'un véhicule (200) ferroviaire,

dans lequel on tire parti, lors de la détermination du au moins un paramètre pertinent pour le comportement de freinage, d'un modèle (PHYSM) physique, qui prend en compte l'influence d'une roue (10) précédant une roue (20) à freiner, et cela en ce qui concerne un effet d'influence que la roue (10) précédente exerce sur l'application de force entre la roue (20) suivante et le rail (30),

**caractérisé en ce que**

- le modèle (PHYSM) physique prend en compte l'influence de liquide sur un rail (30) parcouru par la roue (20) à freiner, et cela par inclusion d'une quantité de liquide agissant sur la roue (20) à freiner,
- dans lequel on calcule la quantité de liquide agissant sur la roue (20) à freiner en incorporant une réduction de liquide, qui est provoquée par la roue (10) précédente.

2. Procédé suivant la revendication 1,

**caractérisé en ce que**

- sur la base du modèle (PHYSM) physique, on calcule, pour le véhicule (200) ferroviaire, une première courbe (HK1) caractéristique auxiliaire, qui décrit une adhérence en fonction du glissement sur rail (30) sec, et une deuxième courbe (HK2) caractéristique auxiliaire, qui décrit l'adhérence en fonction du glissement sur rail (30) humide, et
- en incluant la première et la deuxième courbes (HK1, HK2) caractéristiques auxiliaires et une valeur d'humidité indiquant la quantité de liquide sur le rail (30) lors du freinage, on détermine une courbe caractéristique d'adhérence entre la première et la deuxième courbes (HK1) caractéristiques auxiliaires, qui décrit, dans une courbe en fonction du temps, l'adhérence réelle, qui forme le au moins l'un des paramètres pertinents pour le comportement de freinage à déterminer.

**3.** Procédé suivant la revendication 2,
**caractérisé en ce que**

l'on détermine la courbe caractéristique d'adhérence suivant

$$\texttt{Fx(t)=Fw(t)·HK1(Cx(t))+(1-Fw(t)) ·HK2(Cx(t))}$$

dans laquelle HK1 décrit la première courbe caractéristique auxiliaire en fonction du glissement Cx, qui dépend du temps t, HK2 décrit la deuxième courbe caractéristique auxiliaire en fonction du glissement Cx(t) en fonction du temps et Fw la valeur d'humidité.

**4.** Procédé suivant l'une des revendications 2 à 3,
**caractérisé en ce que**

l'on détermine la première courbe HK1 caractéristique auxiliaire suivant

$$\texttt{HK1=M1(t)·[Ka·E1(t,Q(t))/(1+E1(t,Q(t))}^2\texttt{)+atan(Ks·E1(t,Q(t))))]/Pi}$$

dans laquelle Ka décrit un facteur de réduction sans dimension dans le domaine d'adhérence de la partie de contact roue/rail, Ks un facteur de réduction sans dimension dans le domaine de glissement de la partie de contact roue/rail, Q la force de contact de roue de la roue (20) à freiner sur un rail (30), M1(t) une première fonction auxiliaire de la première courbe (HK1) caractéristique auxiliaire et E1(t) une deuxième fonction auxiliaire de la première courbe (HK1) caractéristique auxiliaire.

**5.** Procédé suivant l'une des revendications 2 à 4 précédentes,
**caractérisé en ce que**

l'on détermine la deuxième courbe (HK2) caractéristique auxiliaire suivant

$$\texttt{HK2=M2(t)·[Ka·E2(t,Q(t))/(1+E2(t,Q(t))}^2\texttt{)+atan(Ks·E2(t,Q(t))))]/Pi}$$

dans laquelle Ka est un facteur de réduction sans dimension dans le domaine d'adhérence de la zone de contact roue/rail, Ks un facteur de réduction sans dimension dans le domaine de glissement de la zone de contact roue/rail, Q la force de contact de roue de la roue (20) à freiner sur un rail (30), M2(t) une première fonction auxiliaire de la deuxième courbe (HK2) caractéristique auxiliaire et E2(t) une deuxième fonction auxiliaire de la deuxième courbe (HK2) caractéristique auxiliaire.

**6.** Procédé suivant l'une des revendications précédentes,
**caractérisé en ce que**
l'on détermine, comme paramètre pertinent pour le comportement de freinage ou comme au moins l'un des paramètres pertinents pour le comportement de freinage, l'adhérence entre la roue (20) à freiner et un rail (30) de chemin de fer.

**7.** Procédé suivant l'une des revendications précédentes,
**caractérisé en ce que**
l'on détermine, comme paramètre pertinent pour le comportement de freinage ou comme au moins l'un des paramètres pertinents pour le comportement de freinage, un paramètre de réglage pour un régleur (211i+1) de glissement, qui règle, lors du freinage de la roue (20) à freiner, la force de freinage s'appliquant à la roue (20), de manière à ce que le glissement réel de la roue corresponde à un glissement de consigne déterminé à l'aide de la courbe caractéristique d'adhérence.

8. Procédé suivant l'une des revendications précédentes,
**caractérisé en ce que**
l'on détermine le au moins un paramètre pertinent pour le comportement de freinage par un appareil de commande du véhicule.

9. Procédé suivant l'une des revendications précédentes,
**caractérisé en ce que**

- l'on détermine le au moins un paramètre pertinent pour le comportement de freinage par un dispositif (100) à l'extérieur du véhicule (200) ferroviaire et on l'utilise dans le cadre d'un procédé de mise en service d'un système (210) de freinage du véhicule (200) ferroviaire, dont le système de freinage doit satisfaire des conditions d'admission données à l'avance,
- dans lequel on simule la satisfaction des conditions d'admission en incluant le au moins un paramètre déterminé, pertinent pour le comportement de freinage.

10. Dispositif (100) de détermination d'au moins un paramètre, pertinent pour le comportement de freinage, de commande ou de réglage d'un système (210) de freinage d'un véhicule (200) ferroviaire,

dans lequel le dispositif (100) est conformé pour, lorsque l'on détermine le paramètre, tirer parti d'un modèle (PHYSM) physique, qui prend en compte l'influence d'une roue (10) précédente une roue (20) à freiner, et cela en ce qui concerne un effet d'influence que la roue (10) précédant exerce sur l'adhérence entre la roue (20) suivante et le rail (30),
**caractérisé en ce que**

- le modèle (PHYSM) physique prend en compte l'influence de liquide sur un rail (30) parcouru par la roue (20) à freiner, et cela par inclusion d'une quantité de liquide agissant sur la roue (20) à freiner,
- dans lequel on calcule la quantité de liquide agissant sur la roue (20) à freiner en incorporant une réduction de liquide, qui est provoquée par la roue (10) précédente.

11. Dispositif (100) suivant la revendication 10,
**caractérisé en ce que**

- le dispositif (100) est constitué pour, sur la base d'une valeur d'humidité, indiquant l'humidité sur le rail (30) à parcourir, déterminer, sous la forme d'une courbe caractéristique d'adhérence, l'adhérence, qui forme un paramètre pertinent pour le comportement de freinage, et pour déterminer, sur la base de la courbe caractéristique d'adhérence déterminée, comme paramètre supplémentaire pertinent pour le comportement de freinage, un paramètre de réglage d'un régleur (211i, 211i+1) de glissement du véhicule (200) ferroviaire,
- dans lequel le régleur (211i, 211i+1) de glissement règle, par réglage du glissement, le freinage (200) du véhicule ferroviaire, sur la base de paramètre supplémentaire pertinent pour le comportement de freinage.

12. Véhicule (200) ferroviaire ayant un dispositif (100) suivant la revendication 10 ou 11.

13. Véhicule (200) ferroviaire suivant la revendication 12,
**caractérisé en ce que**

- le dispositif (100) est constitué pour déterminer, sur la base d'une valeur d'humidité indiquant l'humidité sur le rail (30) à parcourir, l'adhérence, qui forme un paramètre pertinent pour le comportement de freinage et, sur la base de la courbe caractéristique d'adhérence déterminée, déterminer, comme paramètre supplémentaire pertinent pour le comportement de freinage, un paramètre de réglage d'un régleur (211i, 211i+1) de glissement du véhicule (200) ferroviaire,
- dans lequel le régleur (211i, 211i+1) de glissement règle le freinage du véhicule (200) ferroviaire en réglant le glissement, sur la base de ce paramètre supplémentaire pertinent pour le comportement de freinage.

FIG 1

FIG 2

EP 4 377 173 B1

FIG 3

EP 4 377 173 B1

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017175108 A1
- EP 3331736 B1